# FASCICULE DE BREVET EUROPEEN

(11) **EP 3 072 230 B1**
(45) Date de publication et mention de la délivrance du brevet: **29.11.2017**
(21) Numéro de dépôt: 14796817.6
(22) Date de dépôt: 14.10.2014
(51) Int. Cl.: H02P 9/06, B60W 10/30, H02P 9/00, B60W 10/08, B60W 30/18

(54) **PROCEDE DE COMMANDE D'UN ALTERNATEUR ASSOCIE A UN MOTEUR THERMIQUE DE VEHICULE AUTOMOBILE**
VERFAHREN ZUR STEUERUNG EINES MIT EINEM KRAFTFAHRZEUG-VERBRENNUNGSMOTOR KOMBINIERTEN GENERATORS
METHOD FOR CONTROLLING AN ALTERNATOR COMBINED WITH A MOTOR VEHICLE COMBUSTION ENGINE

(30) Priorité: 18.11.2013 FR 1361284
(43) Date de publication de la demande: 28.09.2016
(73) Titulaire: PSA Automobiles SA, 78300 Poissy (FR)
(72) Inventeur: GRISI, Fabrice, 92250 La Garenne Colombes (FR); CHAUNUT, Francois, 92400 Courbevoie (FR)
(74) Mandataire: Renous Chan, Véronique
(86) Numéro de dépôt international: PCT/FR2014/052621
(87) Numéro de publication internationale: WO 2015/071563

(56) Documents cités:
- EP-A2- 0 348 622
- DE-A1- 19 842 496
- DE-A1-102011 055 085

## Description

La présente invention est relative à un procédé de commande d'un alternateur associé à un moteur thermique de véhicule automobile.

Plus particulièrement, l'invention concerne un procédé de commande d'un alternateur associé à un moteur thermique de véhicule automobile, incluant une phase de lestage de l'alternateur, cette phase de lestage étant destinée à recharger une batterie du véhicule pendant une période de décélération du véhicule.

Ce genre de procédé est connu du document FR2801253 dans lequel il est question du lestage pour faire générer temporairement à l'alternateur une puissance supérieure à la puissance consommée simultanément par les équipements électriques du véhicule, ainsi que du problème de la décélération additionnelle résultant du travail supplémentaire de l'alternateur. Ce document préconise de gérer la boîte de vitesses du véhicule en changeant de rapport vers un rapport supérieur dans lequel le frein moteur est moins important. La solution proposée est valable uniquement pour un véhicule à boîte de vitesses de type à commande automatisée. Le changement de rapport peut ne pas être souhaité par le conducteur, au détriment de son confort.

Une solution de commande susceptible d'être utilisée dans le cas d'un véhicule à boîte de vitesses non automatisée peut être intéressante car ces véhicules sont économiques et représentent une partie importante du marché. Sur de tels véhicules, les contraintes de commande relatives au lestage sont augmentées si aucun capteur spécifique n'indique le rapport engagé, celui-ci pouvant être calculé en comparant le régime moteur et la vitesse du véhicule. En outre, sur de tels véhicules, des problèmes de fausse détection de changement de rapport doivent être évités. Par ailleurs, les opérations de calcul peuvent prendre du temps et retarder le commencement du lestage, et donc la quantité d'énergie gratuite récupérée en décélération du véhicule.

D'autres procédés de ce genre sont connus des documents DE 10 2011 055085 A1, EP 0 348 622 A2 et DE 198 42 496 A1.

La présente invention a notamment pour but d'améliorer les solutions existantes.

A cet effet, l'invention a pour objet un procédé de commande d'un alternateur associé à un moteur thermique de véhicule automobile, incluant une phase de lestage de l'alternateur, cette phase de lestage étant destinée à recharger une batterie du véhicule pendant une période de décélération du véhicule. Le procédé comprend d'une part une étape de détermination d'accroissement du régime moteur quand l'injection de carburant dans le moteur est coupée lors d'un changement à réduction de démultiplication dans une boîte de vitesses du véhicule et d'autre part une étape lancement de lestage de l'alternateur, ce lestage étant initié dès que la variation d'accroissement du régime moteur est suffisante après une période de ralenti du moteur intervenue lors dudit changement de démultiplication, avant même qu'une donnée de reconnaissance de fin de changement de démultiplication soit disponible.

Dans divers modes de réalisation du procédé selon l'invention, on peut éventuellement avoir recours en outre à l'une et/ou à l'autre des dispositions suivantes :
- la variation d'accroissement du régime moteur suffisante est déterminée par calcul de la dérivée du régime moteur et par détermination d'une croissance suffisante de cette dérivée ;
- la croissance suffisante de la dérivée du régime moteur comprend la détermination d'un dépassement d'un seuil par cette dérivée ;
- le changement à réduction de démultiplication dans la boîte de vitesses est un changement de rapports discrets d'un rapport supérieur vers un rapport inférieur de la boîte de vitesses pendant lequel le moteur est désaccouplé de la boîte de vitesses et pendant lequel le moteur a son régime qui décroit sensiblement à son régime de ralenti pendant ledit désaccouplement, l'injection de carburant dans le moteur pouvant être activée pendant que le moteur est à son régime de ralenti.

Par ailleurs, l'invention a également pour objet un véhicule automobile comportant un moteur thermique, un alternateur associé au moteur thermique, une batterie reliée à l'alternateur, une boîte de vitesses et au moins un calculateur de gestion du moteur et de l'alternateur, dans lequel le calculateur est conformé pour mettre en oeuvre le procédé selon l'invention de manière que le lestage soit initié dès que la variation d'accroissement du régime moteur est suffisante après la période de ralenti du moteur intervenue lors du changement de démultiplication, avant même qu'une donnée de reconnaissance de fin de changement de démultiplication soit disponible relativement au changement à réduction de démultiplication dans la boîte de vitesses.

Dans un mode de réalisation de ce véhicule, la boîte de vitesses détermine une pluralité de rapports discrets de démultiplication et le moteur est désaccouplé de la boîte de vitesses pendant les changements de rapports, le véhicule étant dépourvu de capteur de rapport engagé. Par ailleurs, dans ce véhicule, la boîte de vitesses et le moteur peuvent être désaccouplés ou accouplés via un embrayage, le véhicule étant dépourvu de capteur de l'état de découplage ou de couplage de l'embrayage.

D'autres buts, caractéristiques et avantages de l'invention apparaîtront au cours de la description suivante d'un de ses modes de réalisation, donné à titre d'exemple non limitatif, en regard des dessins joints dans lesquels :
- la figure 1 est un diagramme représentant deux courbes de régime moteur évoluant dans le temps ;
- la figure 2 est un diagramme représentant une courbe de dérivée du régime moteur évoluant dans le temps ;
- la figure 3 est un diagramme représentant une courbe de coupure d'injection évoluant dans le temps ;
- la figure 4 est un diagramme représentant une courbe de lestage de l'alternateur évoluant dans le temps ;
- la figure 5 est un diagramme quelques étapes de procédé lestage d'alternateur.

Sur les différentes figures, les mêmes références désignent des éléments identiques ou similaires.

Dans un véhicule automobile, il est courant qu'un moteur thermique soit alimenté en carburant de type carburant fossile. Ce moteur thermique est associé à divers accessoires tels qu'un alternateur destiné à alimenter divers équipements du véhicule consommant de l'énergie électrique et destinés également à recharger la batterie du véhicule. Quand l'alternateur travaille pour fournir de l'énergie électrique, il consomme de l'énergie mécanique issue du moteur thermique et cette énergie peut provenir d'un enrichissement de l'injection de carburant fossile pour compenser l'effort supplémentaire nécessaire au fonctionnement de l'alternateur à fournir par le moteur thermique.

L'un des problèmes est de minimiser autant que possible la consommation de carburant et donc de gérer au mieux les périodes de lestage de l'alternateur pendant lesquelles ce dernier produit de l'énergie électrique par prélèvement d'énergie mécanique. Le lestage correspond à la surcharge de la batterie 12 Volts par l'alternateur.

L'alternateur peut recevoir de l'énergie mécanique alors que le véhicule est en phase de roulage de type frein moteur et dans ce cas, l'énergie récupérée est gratuite en considérant qu'elle n'est pas issue d'une consommation de carburant. En effet, l'énergie mécanique est due dans ce cas au déplacement du véhicule qui entraîne le moteur via des organes de transmission situés entre les roues motrices et le moteur, sans que du carburant soit injecté. En effet, pendant les phases de frein moteur, l'injection de carburant dans le moteur peut être coupée ou réduite à un minimum négligeable. Ainsi, il est avantageux de pouvoir limiter le prélèvement d'énergie par l'alternateur et de faire travailler au maximum ce dernier pendant les phases de fonctionnement du véhicule dans lesquelles le carburant n'est pas injecté. Il s'agit alors de limiter le prélèvement de l'alternateur dans les phases où le moteur fonctionne avec du carburant injecté pour que le carburant utilisé serve autant que possible à faire tourner le moteur soit pour propulser le véhicule soit pour tenir le ralenti.

Avantageusement, l'invention permet d'augmenter la durée des phases de lestage de l'alternateur en anticipant le commencement de ces phases dans certains cas d'utilisation du véhicule, en particulier lorsque par exemple le véhicule roule en descente et/ou en décélération. Les diverses figures permettent de voir divers paramètres de fonctionnement du véhicule dans le temps et de bien appréhender les avantages des instants appropriés de lancement du lestage de l'alternateur.

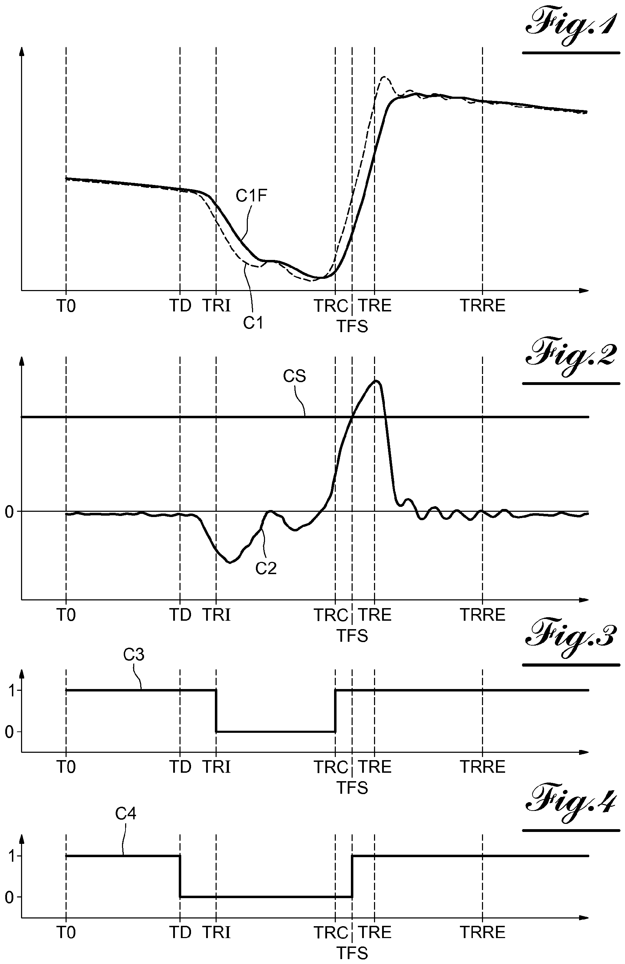

A l'instant T0 tel qu'indiqué aux figures, le véhicule est considéré en condition de roulage en frein moteur, un rapport de vitesse étant engagé et le véhicule ralentissant petit à petit pendant que l'injection est coupée. La courbe C1 de la figure 1 montre le régime moteur brut alors que la courbe C1F montre le régime moteur filtré. Un tel filtrage est assez classique pour utiliser la donnée de régime moteur par un calculateur du véhicule tel qu'un calculateur d'injection ou tout autre calculateur utilisant le paramètre de régime moteur pour gérer divers paramètres de fonctionnement du véhicule. Le filtrage permet de gommer certaines variations qui sont trop importantes dans un trop court espace de temps. La courbe C2 de la figure 2 correspond à la dérivée de la courbe C1 F de régime moteur filtré. Le calculateur agissant pour la gestion du moteur et de l'alternateur utilise les données de régime moteur corrigé par ledit filtrage ainsi que de dérivée du régime moteur corrigé, pour déterminer la coupure d'injection et la demande de lestage.

Pendant la phase de roulage en frein moteur, les courbes de régime moteur C1 et C1 F sont avec une pente légèrement descendante de manière sensiblement constante. Bien entendu, pendant la phase de roulage à frein moteur, la commande d'accélération de type commande par la pédale d'accélérateur est désactivée, c'est-à-dire que le conducteur a relâché toute pression sur la pédale d'accélérateur.

Pendant cette phase de frein moteur, la courbe C2 concernant la dérivée du régime moteur, telle qu'indiquée à la figure 2, est sensiblement horizontale car la pente de variation du régime moteur est sensiblement constante. La courbe C3 du coupleur d'injection est à la valeur 1 et la courbe C4 de demande de lestage est également à la valeur 1. En effet, pendant la phase de frein moteur avec un rapport engagé alors que la vitesse du véhicule varie lentement en décroissant avec coupure de l'injection, le rechargement de la batterie par l'alternateur en lestage peut être efficient.

A force de diminution de la vitesse de roulage du véhicule dans son rapport initial de démultiplication de la boîte de vitesses, le régime moteur finit par être bas et il est nécessaire de changer de rapport en rétrogradant. Ainsi, l'instant TD marque l'ouverture de l'embrayage pour changer de rapport de démultiplication dans la boîte de vitesses. Le moteur qui tourne à vide a alors son régime qui descend naturellement, jusqu'à être à proximité du régime de ralenti du fait des frottements internes du moteur. Quand le régime moteur arrive à proximité du régime de ralenti, la coupure d'injection passe de sa valeur 1 à sa valeur 0, si bien que du carburant est à nouveau injecté pour que le moteur puisse tenir son régime de ralenti sans caler. L'effet de cette injection de carburant se voit sur les courbes de la figure 1 et la courbe de la figure 2 par des variations après l'instant TRI de reprise d'injection pour le ralenti.

Le lestage est arrêté à l'instant TD de débrayage. Si bien que la valeur de la courbe C4 correspondante est 0. Quand l'embrayage est ouvert, c'est-à-dire débrayé, la boîte de vitesses est commandée de manière à passer du rapport de démultiplication initial, par rapport le troisième rapport de démultiplication, vers un rapport inférieur, par exemple le deuxième rapport de démultiplication de la boîte de vitesses. Ce rapport est donc un rapport plus court.

La commande de changement de rapport peut être soit une commande manuelle par le conducteur via un levier de vitesse soit une commande automatisée si la boîte de vitesses est pourvue d'une telle automatisation par robot. Il en est de même pour la commande de l'embrayage. De telles commandes sont de type connu.

Quand l'embrayage est refermé après engagement du rapport inférieur de démultiplication de la boîte de vitesses, le régime moteur augmente naturellement à partir de son régime de ralenti, et la dérivée du régime moteur varie aussi en augmentant. Cette augmentation intervient jusqu'à ce que la dérivée atteigne une valeur seuil qui est représentée par une courbe horizontale CS à la figure 2. L'instant de franchissement du seuil par la dérivée de régime moteur est indiqué par la dénomination TFS sur la ligne des ordonnées des graphiques des figures. Quand l'embrayage est complètement fermé, le moteur est à nouveau en prise à frein moteur avec les roues motrices. Le régime moteur reprend donc sa descente sensiblement régulière du fait du frein moteur.

La coupure d'injection est réactivée à sa valeur 1 dès l'instant TRC de fin de ralenti qui correspond au début de fermeture de l'embrayage. L'instant TFS de franchissement de seuil par la dérivée du régime moteur est choisi pour réactiver la demande de lestage de l'alternateur afin de récupérer de l'énergie du roulage du véhicule en frein moteur pour recharger la batterie et alimenter tous les accessoires électriques du véhicule.

Dans le cas considéré de véhicule à boîte de vitesses manuelle et embrayage à commande par pédale d'embrayage, le véhicule est dépourvu pour des raisons par exemple d'économie ou de simplification, de capteurs de rapport engagé ou de capteurs de position de la pédale d'embrayage, si bien que la fin du changement de rapport doit être calculée par le calculateur en fonction desdites données de régime moteur et de dérivée au lieu d'être calculée par utilisation de données de capteur appropriées. Plus généralement le changement de démultiplication est effectué par changements de rapports déterminés la boîte de vitesses, le moteur et la boîte de vitesses pouvant être désaccouplés ou accouplés via un embrayage ou équivalent, le véhicule étant dépourvu de capteur de l'état de couplage ou de découplage par l'embrayage. L'instant réel de rapport engagé TRE est antérieur à un instant TRRE de reconnaissance définitive de rapport engagé. L'instant TRRE de rapport engagé est celui auquel le calculateur considéré du véhicule pour le fonctionnement du moteur a validé ses calculs pour déterminer que le rapport de démultiplication inférieur est bien engagé, de manière certaine.

Cependant, il a été expliqué que la fin réelle de changement de rapport est à l'instant TRE de rapport engagé. Pour allonger autant que possible la durée de lestage de l'alternateur, la demande de lestage de l'alternateur pour produire de l'énergie électrique est anticipée à l'instant TFS de franchissement de seuil au lieu d'attendre l'instant TRRE de reconnaissance de rapport engagé. La demande de lestage de l'alternateur pour produire de l'énergie électrique est donc anticipée même avant l'instant TRE de rapport engagé.

Le lestage est donc anticipé dès que le régime moteur augmente à la fermeture de l'embrayage. Ceci permet d'accroître le temps pendant lequel intervient le lestage de l'alternateur, en évitant que du carburant soit injecté pour ce travail de l'alternateur. Cette anticipation permet de profiter le plus tôt possible de l'apport d'énergie par les roues du véhicule lorsque ce dernier roule en frein moteur. Compte tenu des paramètres utilisés en considérant la variation du régime moteur lors du changement de rapport, les erreurs de fausse détection de fin de changement de rapport sont limitées, même sans attendre l'instant TRRE de fin validée de changement de rapport par le calculateur concerné du véhicule.

Quand le deuxième rapport de démultiplication de la boîte de vitesses est engagé après l'instant TRE, les courbes de régime moteur de la figure 1 permettent de comprendre que le véhicule continue normalement son roulage en frein moteur avec décroissance régulière de sa vitesse. La dérivée de régime moteur recommence à se stabiliser à un niveau bas, cette dérivée n'étant pas complètement constante dans l'exemple représenté mais subissant quelques petites variations en oscillations. Quand la détection de reconnaissance de rapport engagé est effective, après l'instant TRRE, le lestage de l'alternateur reprend des lois qui ne sont pas spécifiques à celle du changement de rapport comme décrit précédemment.

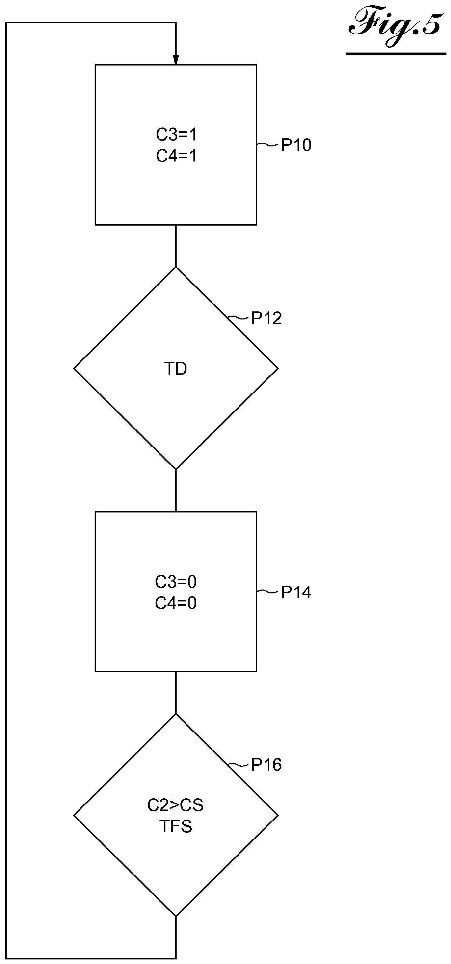

De manière générale, le procédé de commande de lestage de l'alternateur lors du changement descendant de rapport de la boîte de vitesses quand plusieurs phases de fonctionnement du véhicule se succèdent, comme le schématise la figure 5. Ce procédé intervient quand il y a, en roulage du véhicule au frein moteur, une phase P10 de réduction préalable du régime moteur quand l'injection de carburant dans le moteur est coupée. Pendant cette phase préalable, le lestage intervient. Quand une phase P12 de changement de rapport de démultiplication dans la boîte de vitesses intervient, par exemple en ouvrant l'embrayage et en commandant la boîte de vitesses manuellement comme dans le cas décrit précédemment, le lestage est arrêté à l'ouverture de l'embrayage. Cette interruption de lestage est la phase P14 à la figure 5. Des étapes se succèdent alors pour initier à nouveau le lestage, le plus tôt possible. Le lestage est à nouveau initié dès que la variation d'accroissement du régime moteur est suffisante, à la phase P16 de la figure 5, après la période de ralenti qui est caractéristique de l'intervalle de temps pendant lequel le changement de rapport est intervenu alors que l'embrayage est ouvert. Cette initiation du lestage est anticipée avant même que soit disponible de manière certaine une donnée de reconnaissance de fin de changement de démultiplication, à savoir dans l'exemple décrit précédemment l'instant TRRE de la reconnaissance de rapport engagé.

L'initialisation du lestage en fin de changement de rapport obéit aux étapes résultant des explications données en relation avec la figure 1. Il y a ainsi d'une part une étape de détermination d'accroissement du régime moteur quand l'injection de carburant dans le moteur est coupée lors d'un changement à réduction de démultiplication dans une boîte de vitesses du véhicule et d'autre part une étape lancement de lestage, ce lestage étant initié dès que la variation d'accroissement du régime moteur est suffisante après la période de ralenti du moteur intervenue lors dudit changement de rapport de démultiplication, avant même que donnée de reconnaissance de fin de changement de démultiplication soit disponible. Avantageusement, cette variation d'accroissement du régime moteur de manière suffisante est déterminée par le calcul de la dérivée du régime et par la détermination d'un dépassement d'un seuil par cette dérivée.

Avantageusement, la phase d'interruption de l'arrêt du lestage, pendant que le véhicule a son moteur qui est au ralenti avec l'injection de carburant qui est activée, est raccourcie autant que possible. Ce raccourcissement d'interruption de lestage est favorable, en particulier dans le cas d'un roulage avec de nombreux changements de rapport. Il est profité ainsi gratuitement d'instants supplémentaires de lestage de l'alternateur sans consommation dédiée de carburant pour lester l'alternateur.

L'invention permet de limiter toute fausse détection de fermeture de l'embrayage à la fin du rétrogradage en vue de rétablir la demande de lestage qui peut être initiée au plus tôt après l'intervalle de fonctionnement du moteur au ralenti avec injection de carburant. L'avantage est que, pendant le fonctionnement au ralenti, le lestage de l'alternateur est désactivé momentanément sans surcharge de l'injection qui serait nécessaire si le lestage était maintenu au ralenti.

Avantageusement, le procédé tel que décrit précédemment permet de se passer de capteurs spécifiques pour valider au plus tôt les fins de changement de rapport de vitesses.

La solution proposée permet d'augmenter la durée des phases de lestage en anticipant leur commencement. Ainsi, la solution proposée permet de gagner la totalité du temps de reconnaissance de rapport, par exemple 750ms. La solution proposée permet aussi de gagner une partie du temps de synchronisation de régime moteur lors de la fermeture de l'embrayage, soit par exemple 150ms sur les 300ms qui sont possibles. Le gain de temps de lestage est donc par exemple de 900ms sur chaque rétrogradage en décélération. Sur un cycle comportant par exemple quarante rétrogradages, le gain de consommation apporté par cette innovation s'élèvera à 0.2g CO2/km, sur les applications boite de vitesses mécaniques. Le gain peut être différent, par exemple de 750ms en considérant la somme de 450ms de reconnaissance de rapport et 300ms d'anticipation sur la fermeture d'embrayage.

La réactivation du lestage est effectuée lors du franchissement du seuil mais il peut aussi être considéré seulement une variation franchement positive de la remontée de la dérivée du régime moteur.

Dans l'exemple considéré, il a été choisi un changement de démultiplication par des rapports discrets de boîte de vitesses de type boîte de vitesses manuelle. Une telle boîte de vitesses comporte par exemple cinq à six rapports discrets de démultiplication. Cependant, le procédé comme il a été expliqué peut aussi s'appliquer à des boîtes de vitesses robotisées dont l'embrayage ainsi que le changement des rapports sont commandés par un automate. Le principe peut également être utilisé pour d'autres types de boîtes de vitesses par exemple automatisées avec des instants pendant lesquels, lors d'un changement de rapport, le moteur est découplé de la sortie de la transmission vers les arbres de transmission raccordés aux roues du véhicule, avec un fonctionnement du moteur au ralenti pendant la période de changement de rapport.

## Revendications

1. Procédé de commande d'un alternateur associé à un moteur thermique de véhicule automobile, incluant une phase de lestage de l'alternateur, cette phase de lestage étant destinée à recharger une batterie du véhicule pendant une période de décélération du véhicule, **caractérisé en ce que** le procédé comprend d'une part une étape de détermination d'accroissement (TRC, TFS) du régime moteur (C1, C1 F) quand l'injection de carburant dans le moteur est coupée lors d'un changement à réduction de démultiplication dans une boîte de vitesses du véhicule et d'autre part une étape lancement de lestage (C4) de l'alternateur, ce lestage étant initié dès que la variation d'accroissement du régime moteur est suffisante après une période de ralenti (TRI) du moteur intervenue lors dudit changement de démultiplication, avant même qu'une donnée de reconnaissance de fin de changement de démultiplication soit disponible.

2. Procédé selon la revendication précédente, **caractérisé en ce que** la variation d'accroissement (TRC, TFS) du régime moteur (C1, C1 F) suffisante est déterminée par calcul de la dérivée (C2) du régime moteur et par détermination d'une croissance suffisante de cette dérivée.

3. Procédé selon la revendication précédente, **caractérisé en ce que** la croissance suffisante de la dérivée (C2) du régime moteur comprend la détermination d'un dépassement d'un seuil (CS) par cette dérivée.

4. Procédé selon l'une quelconque des revendications précédentes, **caractérisé en ce que** le changement à réduction de démultiplication dans la boîte de vitesses est un changement de rapports discrets d'un rapport supérieur vers un rapport inférieur de la boîte de vitesses pendant lequel le moteur est désaccouplé de la boîte de vitesses et pendant lequel le moteur a son régime qui décroit sensiblement à son régime de ralenti (TRI) pendant ledit désaccouplement, l'injection de carburant dans le moteur pouvant être activée pendant que le moteur est à son régime de ralenti.

5. Véhicule automobile comportant un moteur thermique, un alternateur associé au moteur thermique, une batterie reliée à l'alternateur, une boîte de vitesses et au moins un calculateur de gestion du moteur et de l'alternateur, dans lequel le calculateur est conformé pour mettre en oeuvre le procédé selon l'une quelconque des revendications précédentes de manière que le lestage (C4) soit initié dès que la variation d'accroissement (TRC, TFS) du régime moteur (C1, C1 F) est suffisante après la période de ralenti (TRI) du moteur intervenue lors du changement de démultiplication, avant même qu'une donnée de reconnaissance de fin de changement de démultiplication soit disponible relativement au changement à réduction de démultiplication dans la boîte de vitesses.

6. Véhicule selon la revendication précédente, dans lequel le calculateur est conformé pour mettre en oeuvre le procédé selon la revendication 4, **caractérisé en ce que** la boîte de vitesses détermine une pluralité de rapports discrets de démultiplication et le moteur est désaccouplé de la boîte de vitesses pendant les changements de rapports, le véhicule étant dépourvu de capteur de rapport engagé.

7. Véhicule selon la revendication précédente, dans lequel le calculateur est conformé pour mettre en oeuvre le procédé selon la revendication 4, **caractérisé en ce que** la boîte de vitesses et le moteur peuvent être désaccouplés ou accouplés via un embrayage, le véhicule étant dépourvu de capteur de l'état de découplage ou de couplage de l'embrayage.

## Patentansprüche

1. Verfahren zur Steuerung eines mit einem Kraftfahrzeug-Verbrennungsmotor kombinierten Generators, einschließlich einer Gewichtungsphase des Generators, wobei diese Gewichtungsphase zum Aufladen einer Fahrzeugbatterie während einer Verzögerungsphase des Fahrzeugs vorgesehen ist, **dadurch gekennzeichnet, dass** das Verfahren einerseits einen Schritt der Bestimmung des Anstiegs (TRC, TFS) der Motordrehzahl (C1, C1F), wenn die Kraftstoffeinspritzung in den Motor während einer Änderung an der Reduktion der Untersetzung in einem Getriebe des Fahrzeugs unterbrochen wird und andererseits einen Schritt zur Einleitung der Gewichtung (C4) des Generators, wobei diese Gewichtung eingeleitet wird, sobald die Veränderung des Motordrehzahlanstiegs nach einer Leerlaufphase (TRI) des Motors, die bei der besagten Untersetzungsänderung erfolgt, noch bevor eine Angabe zur Erkennung des Endes der Untersetzungsänderung verfügbar ist, ausreichend ist.

2. Verfahren nach vorhergehendem Anspruch, **dadurch gekennzeichnet, dass** die ausreichende Veränderung des Anstiegs (TRC, TFS) der Motordrehzahl (C1, C1F) durch Berechnung der Ableitung (C2) der Motordrehzahl und durch Bestimmung eines ausreichenden Anstiegs dieser Ableitung bestimmt wird.

3. Verfahren nach vorhergehendem Anspruch, **dadurch gekennzeichnet, dass** der ausreichende Anstieg der Ableitung (C2) der Motordrehzahl die Bestimmung einer Überschreitung einer Schwelle (CS) durch diese Ableitung umfasst.

4. Verfahren nach einem der vorhergehenden Ansprüche, **dadurch gekennzeichnet, dass** die Änderung an der Reduktion der Untersetzung im Getriebe ein Wechsel der getrennten Gänge von einem höheren Gang zu einem niedrigeren Gang des Getriebes ist, während dessen der Motor vom Getriebe entkoppelt ist und während dessen der Motor seine Drehzahl aufweist, die im Wesentlichen auf seine Leerlaufdrehzahl (TRI) während der besagten Entkopplung abnimmt, wobei die Kraftstoffeinspritzung in den Motor aktivierbar ist, während der Motor in seiner Leerlaufdrehzahl ist.

5. Kraftfahrzeug, das einen Verbrennungsmotor, einen mit einem Verbrennungsmotor kombinierten Generator, eine mit dem Generator verbundene Batterie, ein Getriebe und mindestens einen Rechner zur Motor- und Generatorsteuerung umfasst, worin der Rechner zur Umsetzung des Verfahrens nach einem der vorhergehenden Ansprüche konfiguriert ist, so dass die Gewichtung (C4) eingeleitet wird, sobald die Veränderung des Anstiegs (TRC, TFS) der Motordrehzahl (C1, C1F) nach der Leerlaufphase (TRI) des Motors, die bei der besagten Untersetzungsänderung erfolgt, noch bevor eine Angabe zur Erkennung des Endes der Untersetzungsänderung bezüglich der Änderung an der Reduktion der Untersetzung im Getriebe verfügbar ist, ausreichend ist.

6. Fahrzeug nach vorhergehendem Anspruch, worin der Rechner zur Umsetzung des Verfahrens nach Anspruch 4 konfiguriert ist, **dadurch gekennzeichnet, dass** das Getriebe eine Mehrzahl von getrennten Gängen der Untersetzung bestimmt und der Motor während der Gangwechsel vom Getriebe entkoppelt ist, wobei das Fahrzeug keinen Sensor des eingelegten Gangs besitzt.

7. Fahrzeug nach vorhergehendem Anspruch, worin der Rechner zur Umsetzung des Verfahrens nach Anspruch 4 konfiguriert ist, **dadurch gekennzeichnet, dass** das Getriebe und der Motor über eine Kupplung entkoppelt und gekoppelt werden können, wobei das Fahrzeug keinen Sensor zum Zustand der Entkopplung oder Kopplung der Kupplung besitzt.

## Claims

1. Method for controlling an alternator associated with a motor vehicle combustion engine, including a phase of ballasting of the alternator, this ballasting phase being intended to recharge a battery of the vehicle during a period of deceleration of the vehicle, **characterised in that** the method comprises firstly a step of determining an increase (TRC, TSF) in the engine speed (C1, C1F) when the injection of fuel into the engine is cut off when there is a change reducing gearing down in a gearbox of the vehicle and secondly a step of initiation of ballasting (C4) of the alternator, this ballasting being initiated as soon as the variation in increase in the engine speed is sufficient after a period of tickover (TRI) of the engine that occurred during said change in gearing down, before even data on recognition of an end of change in gearing down is available.

2. Method according to the preceding claim, **characterised in that** the sufficient variation in increase (TRC, TFS) in the engine speed (C1, C1F) is determined by calculating the derivative (C2) of the engine speed and by determining a sufficient increase in this derivative.

3. Method according to the preceding claim, **characterised in that** the sufficient increase in the derivative (C2) of the engine speed comprises the determination of the fact that a threshold (CS) is passed by this derivative.

4. Method according to any of the preceding claims, **characterised in that** the change in gearing down in the gearbox is a change in discrete ratios from a high ratio to a lower ratio of the gearbox during which the engine is uncoupled from the gearbox and during which the engine speed decreases substantially to its tickover speed (TRI) during said uncoupling, the injection of fuel into the engine being able to be activated while the engine is at its tickover speed.

5. Motor vehicle comprising a combustion engine, an alternator associated with the combustion engine, a battery connected to the alternator, a gearbox and at least one computer managing the engine and alternator, in which the computer is conformed so as to implement the method according to any of the preceding claims so that the ballasting (C4) is initiated as soon as the variation in increase (TRC, TFS) of the engine speed (C1, C1F) is sufficient after the period of tickover (TRI) of the engine that occurred during the change in gearing down, even before data on recognition of the end of change in gearing down is available in relation to the change in gearing down in the gearbox.

6. Vehicle according to the preceding claim, in which the computer is conformed so as to implement the method according to claim 4, **characterised in that** the gearbox determines a plurality of discrete gearing down ratios and the engine is uncoupled from the gearbox during the changes in ratios, the vehicle having no engaged-ratio sensor.

7. Vehicle according to the preceding claim, in which the computer is conformed so as to implement the method according to claim 4, **characterised in that** the gearbox and the engine can be uncoupled or coupled by a clutch, the vehicle having no sensor for the uncoupling or coupling state of the clutch.
